# EUROPEAN PATENT APPLICATION

(11) **EP 4 459 393 A1**
(43) Date of publication of application: **06.11.2024**
(21) Application number: 23191942.4
(22) Date of filing: 17.08.2023
(51) Int. Cl.: G05B 17/02, G05B 19/042

(54) **OPTIMIZED PLANT OPERATING REGION AND ALARM LIMIT ADVISORY**

(30) Priority: 02.05.2023 IN 202311031193
(71) Applicant: Schneider Electric Systems USA, Inc., Foxborough, MA 02035 (US)
(72) Inventor: Selvaraj, Sundaramoorthiraj, 600100 Chennai (IN); Kabade, Prashant, 500049 Hyderabad (IN); Damodaran, Prem Krishnan, 600091 Chennai (IN)
(74) Representative: Friese Goeden Patentanwälte PartGmbB

(57) **Abstract**

Operation of an industrial plant (100) is simulated based on a range of values of process variable input parameters (108, 110) to produce a range of values of simulated output parameters. An optimum operating region of the plant is defined where the plant operates more economically, such as increasing the yield of a product meeting specification while keeping the operating cost minimum. Identifying the location of the optimum operating region at any moment is of fundamental importance. Finding this region includes collecting process variables such as outputs (112) from a plant historian relevant to the process or asset. A digital twin of the same process is created to analyze the optimal region of assets using simulation software, recommend improvements for the process operation, generate online simulation of nuisance alarm reductions, and provide optimized alarm limits to maintain operation of the industrial asset.

## Description

### BACKGROUND

Operator alarm limits are the first line of defense for an industrial process and should provide an operator with sufficient advance warning to understand and correct a problem before it becomes dangerous. Unfortunately, current methods for finding efficient values for alarm limits are not scientifically-based and can result in poor performance. Improper alarm limits lead to alarm flood, standing alarms, and nuisance alarms, all of which operators routinely ignore as 'false alarms' and which eventually lead to inefficient operation and cause major plant trips/emergency shut downs and accidents.

Setting proper alarm limits and their optimization play a vital role in plant operations. Ineffective plant operating alarm limits are the root cause of the poor performance of industrial alarm systems and eventually lead to plant accidents. An improved framework for the implementation of process alarm limit management is needed for maintaining the operational boundaries of equipment in an industrial plant.

### SUMMARY

Aspects of the present disclosure support operational decision-making for determining values for and managing plant operating and equipment alarm limits. In an aspect, an Operating Process Envelope provides recommendations for maintaining the operational boundaries of an asset, such as equipment in an industrial plant. User input data, including process flow diagrams (PFDs), piping and instrumentation diagrams (P&IDs), heat and material balance (H&MB) documents, process descriptions, and the like, may be automated.

In an aspect, a method for operating an asset of an industrial plant in an optimized operating region comprises selecting a range of values for one or more process variable input parameters associated with the asset and simulating operation of the industrial plant based on the process variable input parameters to produce a range of values of simulated output parameters of the industrial plant. The method also includes plotting the process variable input parameters and the simulated output parameters on a parallel coordinates plot and identifying, from the parallel coordinates plot, a sub-range of the selected range of values for the process variable input parameters for which the simulated output parameters are within an optimum range of values. In addition, the method comprises controlling the asset based on the process variable input parameters in the identified sub-range.

In another aspect, a method for operating an asset of an industrial plant in an optimized operating region comprises selecting a range of values for one or more process variable input parameters associated with the asset and simulating operation of the industrial plant based on the process variable input parameters to produce a range of values of simulated output parameters of the industrial plant. The method also includes identifying at least one boundary condition between a first operating state and second operating state as represented by the simulated output parameters and identifying a sub-range of the selected range of values for the process variable input parameters for which the simulated output parameters are within an optimum range of values based on the boundary condition. In addition, the method comprises setting alarm limits configured to maintain operation of the asset such that the industrial plant produces output parameters within the optimum range of values based on the process variable input parameters in the identified sub-range.

In yet another aspect, a system comprises an industrial asset, a controller communicatively coupled to the asset, a processor, and one or more memory devices coupled to the processor. The memory devices store processor-executable instructions that, when executed, configure the processor to select a range of values for one or more process variable input parameters associated with the industrial asset and simulate operation of the industrial plant based on the process variable input parameters to produce a range of values of simulated output parameters of the industrial plant. When executed, the instructions further configure the processor to plot the process variable input parameters and the simulated output parameters on a parallel coordinates plot, identify, from the parallel coordinates plot, at least one boundary condition between a first operating state and a second operating state as represented by the simulated output parameters, and identify a sub-range of the selected range of values for the process variable input parameters for which the simulated output parameters are within an optimum range of values based on the boundary condition. In addition, the instructions, when executed, configure the processor to set alarm limits for the industrial asset via the controller. The alarm limits are configured to maintain operation of the industrial asset such that the industrial plant produces output parameters within the optimum range of values based on the process variable input parameters in the identified sub-range.

Other objects and features of the present disclosure will be in part apparent and in part pointed out herein.

### BRIEF DESCRIPTION OF THE DRAWINGS

FIG. 1 is a block diagram illustrating a process control system according to an embodiment.
FIG. 2 is a block diagram illustrating further aspects of the control system of FIG. 1 according to an embodiment.
FIG. 3 is a block diagram illustrating further aspects of the control system of FIG. 1 and data communications for an asset operation advisor according to an embodiment.
FIG. 4 is a block diagram illustrating an example architecture implementing the asset operation advisor of FIG. 3.
FIGS. 5A and 5B are flow diagrams illustrating an example process of the asset operation advisor according to an embodiment.
FIG. 5C is a flow diagram illustrating an example process of the asset operation advisor according to another embodiment.
FIG. 6 is an example plot identifying an optimized operating zone using parallel coordinate geometry according to an embodiment.

Corresponding reference numbers indicate corresponding parts throughout the drawings.

### DETAILED DESCRIPTION

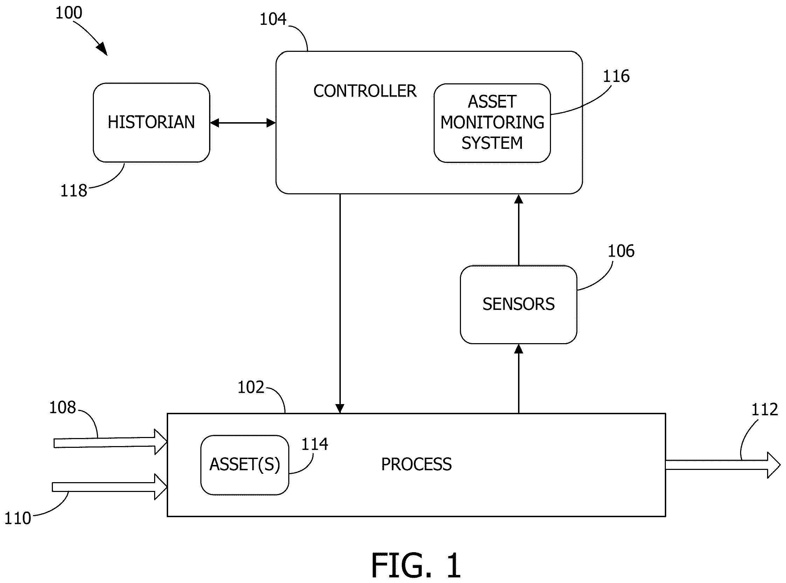

FIG. 1 displays the basic structure of an example process control system 100. In an embodiment, a process 102 is communicatively connected to a controller 104 and sensors 106. The process 102 has inputs 108 and 110 that comprise the necessary inputs for the process to create an output 112. In an embodiment, the input 108 includes energy for powering process 102 and input 110 includes physical or chemical raw materials for use in process 102. The output 112 comprises physical or chemical products from the process or produced energy in the form of electricity or the like.

The controller 104 sends data to process 102 in order to direct the operations of process 102 according to the goals of controller 104. The data sent comprises commands that operate various types of process elements, or assets 114, of the process, such as pumps, motors, valves, actuators, or the like. The asset 114 may be any mechanical, chemical, electrical, biological, or combined mechanism or set of mechanisms that is used to convert energy and materials into value added products or production. The sensors 106 monitor process 102 at various points and gather data from those points. The sensors 106 then send the data gathered to controller 104. Based on the gathered data, controller 104 can send additional commands to process 102. In this way, the system 100 forms a control feedback loop, where controller 104 reacts to changes in process 102 as observed by sensors 106. Different actions carried out by process 102 according to the commands of controller 104 may change the data being gathered by sensors 106, thus causing further adjustments by controller 104 in response to those changes. By implementing this control feedback loop, process 102 can be controlled by controller 104 in an efficient manner.

To ensure safe operation, controller 104 includes one or more condition or asset monitoring systems 116 responsive to sensors 106 for performing vibration analysis, motor current signature analysis, and the like on critical assets 114. In the illustrated embodiment, system 100 also includes a historian 118 configured to capture and store industrial data, including process, alarm, and event history data.

Setting proper alarm limits and their optimization play a vital role in plant operations. Ineffective plant operating alarm limits are the root cause of the poor performance of industrial alarm systems and can eventually lead to plant accidents. Aspects of the present disclosure support operational decision-making for determining values for plant operating alarm limits. A Software as a Service (SaaS) framework, for example, is provided for the implementation of the equipment alarm limit management (Operating Process Envelope) that provides recommendations for maintaining the operational boundaries of asset 114 of industrial process control system 100. In an embodiment, user input data (e.g., PFDs, P&IDs, H&MBs, and process descriptions) is automated using P&ID software. In another embodiment, user input data (e.g., PFDs, P&IDs, H&MBs, and process descriptions) is automated using artificial intelligence (Al) and machine learning (ML) technologies.

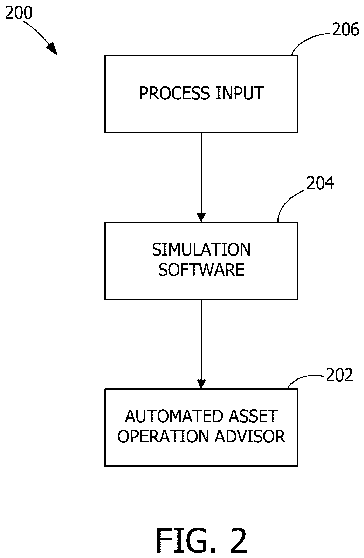

FIG. 2 illustrates a software framework 200 for implementing an automated asset operation advisor 202 for setting and optimizing proper alarm limits for the assets 114 of system 100. In FIG. 2, a simulator 204 processes input at 206 to generate a final process model for use by the automated asset operation advisor 202. A suitable simulation engine embodying simulator 204 is Dynamic Simulation available from AVEVA Group plc, a member of the Schneider Electric group. As described in detail below, asset operation advisor 202 provides recommendations for improving the process 102, generates an online simulation of nuisance alarm reduction, and provides optimized alarm limits. In an embodiment, simulator 204 comprises a digital twin of the industrial process 102.

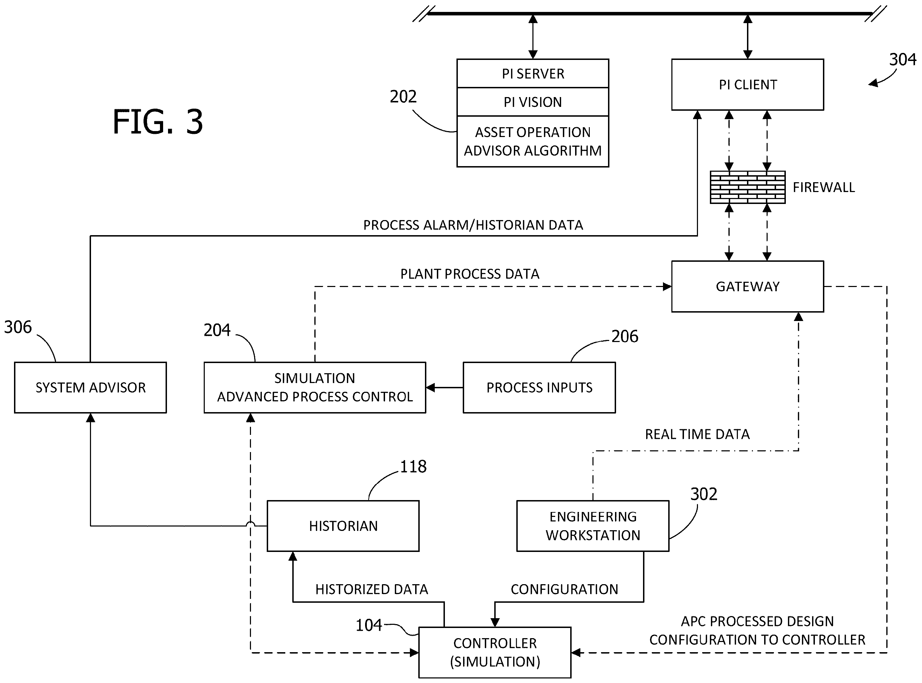

FIG. 3 is a block diagram illustrating further aspects of the control system 100 of FIG. 1 and data communications for asset operation advisor 202 according to an embodiment. In the illustrated embodiment, an engineering workstation 302 provides real time data (e.g., pressure, volume) of assets 114 to asset operation advisor 202 via a process intelligence system 304, such as the PI System available from AVEVA Group plc, a member of the Schneider Electric group, using a runtime database from the historian 118. The asset operation advisor 202 in this embodiment is implemented in the process intelligence system 304. The process intelligence system 304 collects the alarm limits of assets 114 from a distributed control system (DCS) database, indicated as system advisor 306. Schneider Electric's EcoStruxure System Advisor for Process Control, which provides system management system auditing and alarm shelving to ensure operational integrity throughout the plant lifecycle, is a suitable implementation of the system advisor 306. In operation, simulator 204 creates a digital twin, i.e., simulation, for the process model and asset operation advisor 202 compares trend data obtained from the simulation with run time parameter values to validate the model.

According to aspects of the present disclosure, the process variables are plotted against the alarm limits in parallel coordination geometry using, for example, a visualization tool such as PI Vision available from AVEVA Group plc, a member of the Schneider Electric group. Parallel coordination provides the deviations of alarm limit boundaries outside the alarm limits configured. In an embodiment, asset operation advisor 202 reads the equipment design data (e.g., P&IDs and PFDs) to create the database for the same. Using Al, ML, and/or natural language processing (NLP), or the like, reading the PFDs, P&IDs, H&MBs, process descriptions, etc. is automated to provide the recommendations of operation conditions, such as recommendations to maintain the operational boundaries of asset 114 in terms of alarm setpoints and warnings. The process intelligence system 304, such as the PI System available from AVEVA Group plc, a member of the Schneider Electric group, preferably executes algorithms for performing the Al, ML, NLP, or the like. The asset operation advisor 202 provides the recommendations based on the new optimized alarm setpoints to plant operators and provides recommendations to operate on maximum production yield to plant process engineers.

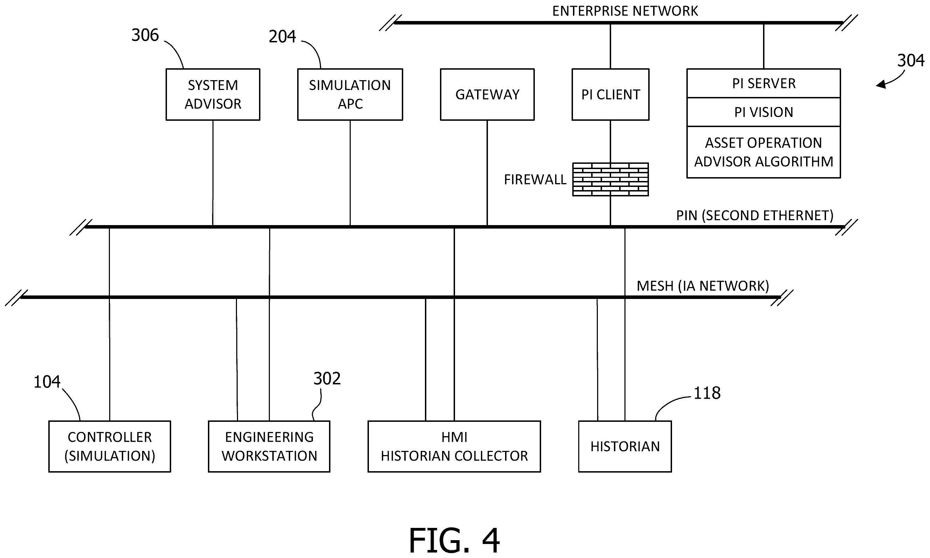

FIG. 4 is a block diagram illustrating an example architecture implementing the asset operation advisor 202 of FIG. 3. During an assessment phase, for instance, the recommendations are generated with the simulated controller 104.

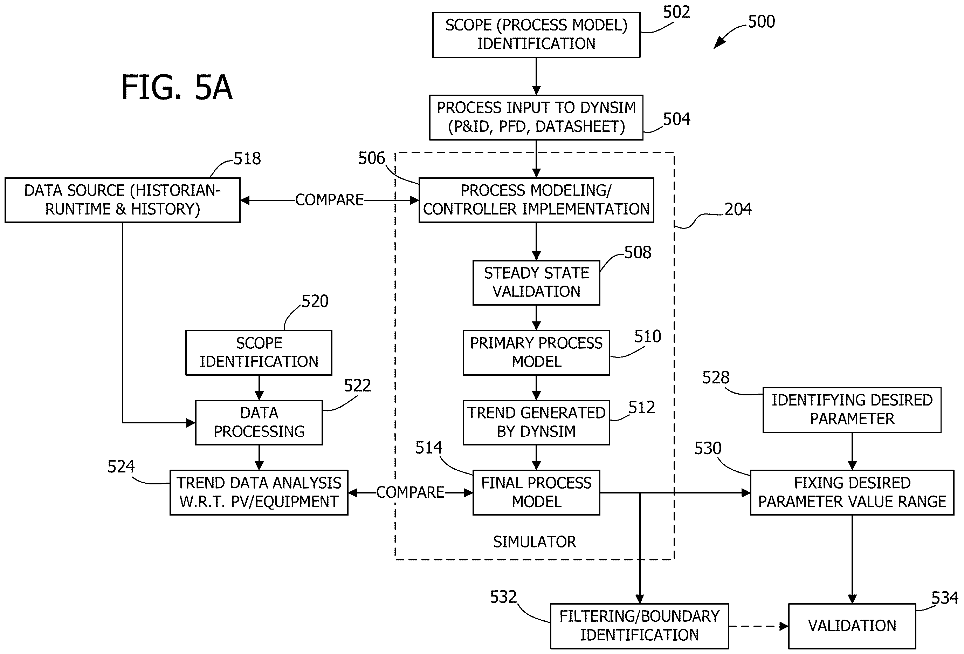

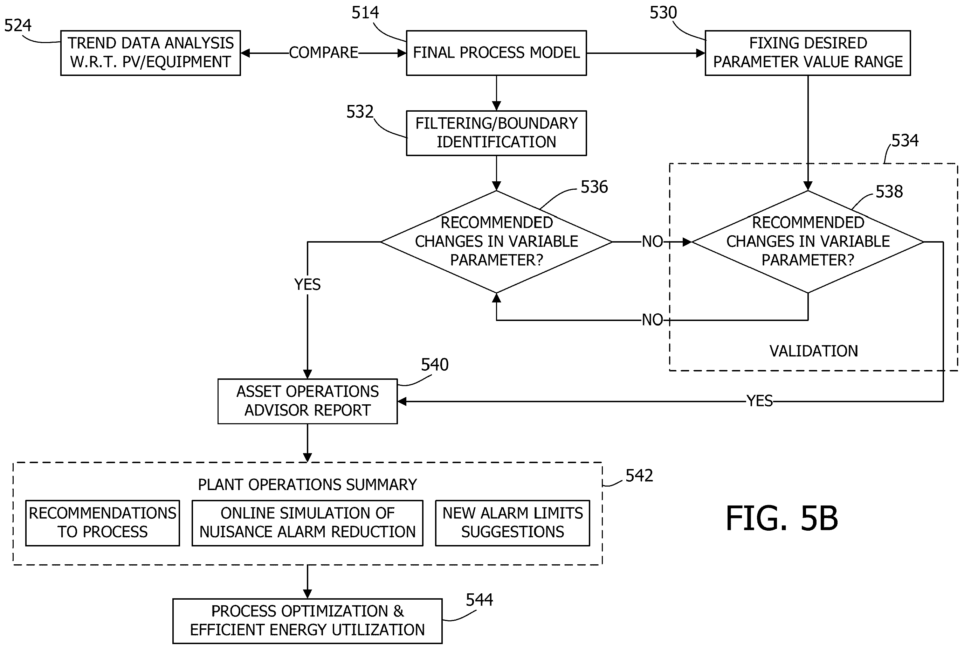

FIGS. 5A and 5B illustrate an example process 500 implementing aspects of the present disclosure. The process inputs 206 begin at 502 by identifying a desired scope of the process model and continue at 504 by inputting process input to the simulator 204. For example, the process input to simulator 204 takes the form of P&IDs, PFDs, datasheets, etc. In an embodiment, process inputs 206 also include process modeling/controller implementation at 506 and steady state validation 508, which are components of simulator 204. The simulator 204 uses a primary process model at 510 to generate trends at 512 for use in developing a final process model at 514.

As shown in FIG. 5A, the process 500 compares data at 518 from a data source (e.g., the historian 118) to the process modeling/controller implementation at 506. The process inputs 206 provide scope identification at 520 for processing at 522 with this data. In an embodiment, asset operation advisor 202 receives the processed data and performs a trend data analysis with respect to process variables and equipment at 524. The process 500 compares the results of the trend data analysis at 524 to the final process model at 514.

At 528, process inputs 206 identify a desired process variable input parameter and, at 530, fix a value range for the input parameter. In an embodiment, the identified process variable input parameter is associated with asset 114 (e.g., a reactor temperature or a reactor pressure). The simulator 204 inputs the final process model at 514 to automated asset operation advisor 202 for filtering and boundary identification at 532. The process then proceeds to validation of the filtered final process model at 534 based on the identified boundary and an optimum parameter value range. Aspects of the present disclosure permit identifying a sub-range of the selected range of values for the process variable input parameters by identifying a boundary condition between a first operating state and a second operating state as represented by the simulated output parameters to identify an efficient operating range and review desired versus undesired alarm points.

Referring now to FIG. 5B, asset operation advisor 202 determines if there are any recommended changes in the process variable parameter at 536. If not, the process continues with validation at 534. If there are any recommended changes in the process variable parameter at 536 or 538, asset operation advisor 202 generates a report of such at 540 for use in generating a plant operations summary at 542. In an embodiment, the plant operations summary 542 includes one or more of recommendations to the industrial process, an online simulation of nuisance alarm reduction, and suggestions for new alarm limits. Implementation of the plant operations summary results in process optimization and/or efficient energy utilization at 544.

The plant operations summary 542 provides a visual method to find much better values for alarm limits complete with predictions of the standing alarm counts and annunciation rates, which results in the elimination of opinion and guesswork that characterizes conventional prolonged and time-consuming alarm rationalization reviews. Alarm trip points are fundamental in the overall alarm system design and cannot be changed as easily as deadbands and delays.

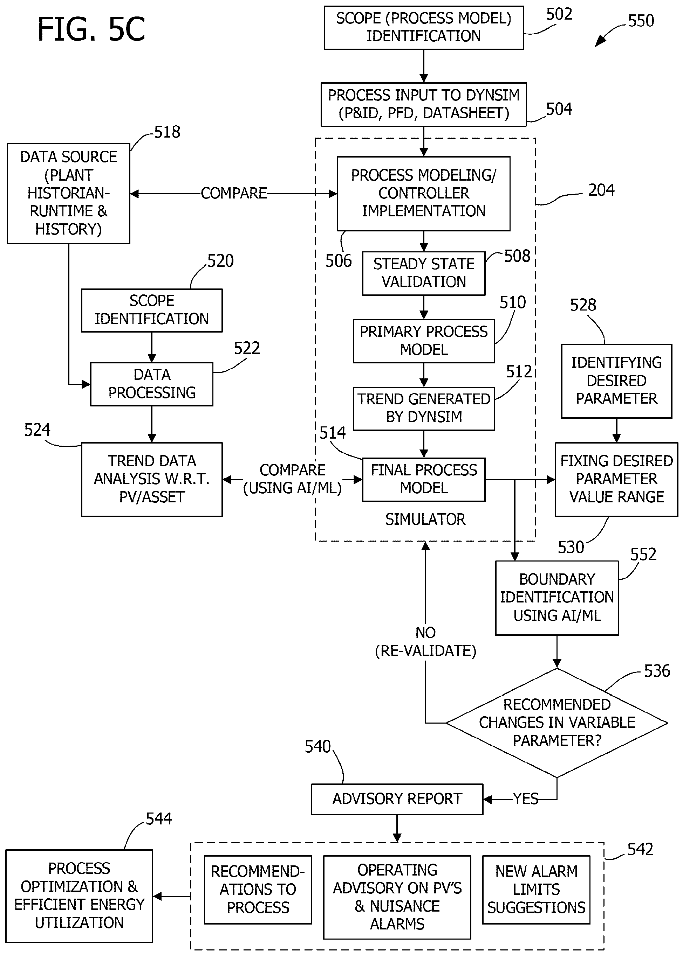

FIG. 5C illustrates an example process 550 implementing aspects of the present disclosure according to another embodiment. Similar to FIGS. 5A and 5B, the process inputs 206 begin at 502 by identifying a desired scope of the process model and continue at 504 by inputting process input to the simulator 204. For example, the process input to simulator 204 takes the form of P&IDs, PFDs, datasheets, etc. In an embodiment, process inputs 206 also include process modeling/controller implementation at 506 and steady state validation 508, which are components of simulator 204. The simulator 204 uses a primary process model at 510 to generate trends at 512 for use in developing a final process model at 514.

As shown in FIG. 5C, the process 500 compares data at 518 from a data source (e.g., plant historian-runtime and history) to the process modeling/controller implementation at 506. The process inputs 206 provide scope identification at 520 for processing at 522 with this data. In an embodiment, asset operation advisor 202 receives the processed data and performs a trend data analysis with respect to process variables and equipment at 524. The process 500 compares the results of the trend data analysis at 524 to the final process model at 514 using AI/ML.

Again, at 528, process inputs 206 identify a desired process variable input parameter and, at 530, fix a value range for the input parameter. In an embodiment, the identified process variable input parameter is associated with asset 114 (e.g., a reactor temperature or a reactor pressure). In FIG. 5C, simulator 204 inputs the final process model at 514 to automated asset operation advisor 202 for boundary identification using AI/ML at 552. The process then proceeds to validation based on the identified boundary and an optimum parameter value range. Aspects of the present disclosure permit identifying a sub-range of the selected range of values for the process variable input parameters by identifying a boundary condition between a first operating state and a second operating state as represented by the simulated output parameters to identify an efficient operating range and review desired versus undesired alarm points.

Referring further to FIG. 5C, asset operation advisor 202 determines if there are any recommended changes in the process variable parameter at 536. If not, the process returns to simulator 204 for re-validation. If there are any recommended changes in the process variable parameter at 536, asset operation advisor 202 generates an advisory report at 540 for use in generating a plant operations summary at 542. In an embodiment, the plant operations summary 542 includes one or more of recommendations to the industrial process, an operating advisory on process variables and nuisance alarms, and suggestions for new alarm limits. Implementation of the plant operations summary results in process optimization and/or efficient energy utilization at 544.

The plant operations summary 542 as shown in FIG. 5C provides a visual method to find much better values for alarm limits complete with predictions of the standing alarm counts and annunciation rates, which results in the elimination of opinion and guesswork that characterizes conventional prolonged and time-consuming alarm rationalization reviews. Alarm trip points are fundamental in the overall alarm system design and cannot be changed as easily as deadbands and delays.

Advantageously, parallel coordinates geometry may be used to identify an optimal operating zone. Parallel coordinates provide a means of visualizing geometric objects in many dimensions and are particularly useful for displaying multivariate data and supporting multivariate analysis. Aspects of the present disclosure include using parallel coordinates geometry to transform orthogonal axes to parallel axes. The input data to the parallel coordinate geometry is real time data (i.e., from a runtime database) and alarm history from the process historian 118. The asset operation advisor 202 also collects the alarm limits of assets 114 from the DCS database of system advisor 306. The process variables are plotted against the alarm limits in parallel coordination geometry and parallel coordination provides the deviations of alarm limit boundaries outside the alarm limits configured. The asset operation advisor 202 reads the equipment design data (e.g., P&IDs and PFDs) using Al, ML, NLP, or the like to create the database for the same. The deviations of alarm limit boundaries and the equipment design data are then compared. As described above, asset operation advisor provides recommendations for maintaining the operational boundaries of asset 114 of industrial process control system 100 based on the process variables deviations and design data.

Aspects of the present disclosure include creating a digital twin of process 100 to analyze optimal operating regions of assets 114. Online simulation of can demonstrate a reduction in nuisance alarms with recommendations of new optimized alarm limits. In addition, grouping of process variables related to the assets 114 can be achieved using asset hierarchy management. The ranges that fall outside of ideal product specifications provide information on how to reduce the range on these variables. In addition, aspects of the present disclosure include extracting P&ID, PFD, H&MB, process description contents, and other user input data (i.e., required data) using, for example, P&ID software. In the manner, asset operation advisor 202 can incorporate values (operating design limits) in a parallel coordinates chart. This permits logical groups of process variables (e.g., all temperatures around a furnace/boiler) and provides flexibility on the boundary conditions recommendations of the assets 114.

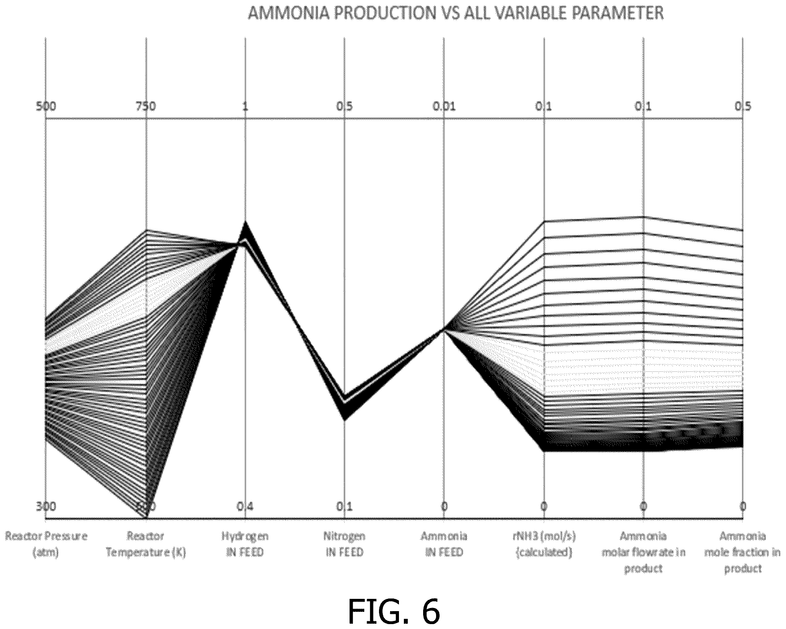

FIG. 6 is an example plot identifying an optimized operating zone using parallel coordinate geometry according to an embodiment. The plot permits visualizing a boundary between a first state (e.g., normal or efficient operation) and a second state (e.g., upset, or abnormal, or inefficient operation) of the plant for making recommendations of operation conditions and setting operating boundaries. In this example, the plot displays the optimum sub-range of values for operating in the first state bounded by less than optimum values for operating in the second state.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

Accordingly, the present invention also relates to the following matters: Optimized plant operating region and alarm limit advisory. Operation of an industrial plant is simulated based on a range of values of process variable input parameters to produce a range of values of simulated output parameters. An optimum operating region of the plant is defined where the plant operates more economically, such as increasing the yield of a product meeting specification while keeping the operating cost minimum. Identifying the location of the optimum operating region at any moment is of fundamental importance. Finding this region includes collecting process variables such as outputs from a plant historian relevant to the process or asset. A digital twin of the same process is created to analyze the optimal region of assets using simulation software, recommend improvements for the process operation, generate online simulation of nuisance alarm reductions, and provide optimized alarm limits to maintain operation of the industrial asset.

## Claims

1. A method for operating at least one asset of an industrial plant in an optimized operating region, the method comprising:
selecting a range of values for one or more process variable input parameters associated with the at least one asset;
simulating operation of the industrial plant based on the process variable input parameters to produce a range of values of simulated output parameters of the industrial plant;
identifying a sub-range of the selected range of values for the one or more process variable input parameters for which the simulated output parameters are within an optimum range of values based on:
at least one parallel coordinates plot of the process variable input parameters and the simulated output parameters, or
at least one boundary condition between a first operating state and a second operating state as represented by the simulated output parameters; and
controlling the at least one asset based on the one or more process variable input parameters in the identified sub-range.

2. A method as set forth in claim 1, further comprising collecting information about the industrial plant to identify the one or more process variable input parameters and the optimum range of values of the simulated output parameters.

3. A method as set forth in claim 2, wherein collecting information about the industrial plant comprises executing one or more machine learning algorithms on a process input, and wherein the process input comprises at least one of: a process flow diagram (PFD), a piping and instrumentation diagram (P&ID), a heating and material balance (H&MB) document, and a process description.

4. A method as set forth in any one of the preceding claims, wherein controlling the at least one asset based on the one or more process variable input parameters in the identified sub-range comprises setting one or more alarm limits configured to maintain operation of the at least one asset such that the industrial plant produces output parameters within the optimum range of values.

5. A method as set forth in claim 4, wherein the optimum range of values of the output parameters produced by the industrial plant represent an efficient operating region for the industrial plant.

6. A method as set forth in any one of the preceding claims, wherein simulating operation of the industrial plant comprises providing the process variable input parameters in the selected range of values as inputs to a digital twin of the industrial plant and producing, by the digital twin, the simulated output parameters based on the provided process variable input parameters.

7. A method as set forth in claim 6, wherein the simulated outputs parameters produced by the digital twin correspond to the output parameters associated with the industrial plant.

8. A method as set forth in any one of the preceding claims, wherein the output parameters associated with the industrial plant include at least one of: an amount of chemical production and a rate of chemical production with at least one optimum alarm limit and efficient operating range.

9. A method as set forth in any one of the preceding claims, wherein the identified process variable input parameters include at least one of: a reactor temperature and a reactor pressure.

10. A method as set forth in any one of the preceding claims, wherein identifying the sub-range of the selected range of values for the one or more process variable input parameters comprises reducing nuisance alarms resulting from the simulated output parameters.

11. A method as set forth in any one of the preceding claims, wherein identifying the sub-range of the selected range of values for the one or more process variable input parameters comprises identifying the at least one boundary condition.

12. A method as set forth in any one of the preceding claims, wherein identifying the sub-range of the selected range of values for the one or more process variable input parameters comprises plotting the process variable input parameters and the simulated output parameters on the at least one parallel coordinates plot.

13. A system comprising:
at least one industrial asset;
at least one controller communicatively coupled to the asset;
a processor; and
one or more memory devices coupled to the processor, the memory devices storing processor-executable instructions that, when executed, configure the processor to:
select a range of values for one or more process variable input parameters associated with the at least one industrial asset;
simulate operation of the industrial plant based on the process variable input parameters to produce a range of values of simulated output parameters of the industrial plant;
plot the process variable input parameters and the simulated output parameters on at least one parallel coordinates plot;
identify, from the parallel coordinates plot, at least one boundary condition for efficient operation between a first operating state and a second operating state as represented by the simulated output parameters;
identify a sub-range of the selected range of values for the one or more process variable input parameters for which the simulated output parameters are within an optimum range of values based on the at least one boundary condition;
and
set one or more alarm limits for the at least one industrial asset via the controller, the alarm limits configured to maintain operation of the at least one industrial asset such that the industrial plant produces output parameters within the optimum range of values based on the one or more process variable input parameters in the identified sub-range.

14. A system as set forth in claim 13, wherein the one or more memory devices coupled to the processor store one or more machine learning algorithms that, when executed by the processor on a process input, collect information about the industrial plant, and wherein the process input comprises at least one of: a process flow diagram (PFD), a piping and instrumentation diagram (P&ID), a heating and material balance (H&MB) document, and a process description.

15. A system as set forth in claim 13 or claim 14, wherein the processor-executable instructions, when executed, further configure the processor to provide the process variable input parameters in the selected range of values as inputs to a digital twin of the industrial plant and produce, by the digital twin, the simulated output parameters based on the provided process variable input parameters.
